# EUROPEAN PATENT APPLICATION

(11) **EP 4 819 532 A1**
(43) Date of publication of application: **07.10.2026**
(21) Application number: 26169448.3
(22) Date of filing: 31.03.2026
(51) Int. Cl.: H04L 9/00

(54) **HOMOMORPHIC IN-NETWORK COMPUTATION**

(30) Priority: 02.04.2025 IL 32004825; 16.10.2025 US 202519359738
(71) Applicant: Mellanox Technologies, Ltd., 2069200 Yokneam (IL)
(72) Inventor: COHEN, Eliahu, 2069200 Yokneam (IL); CARMI, Avishy, 2069200 Yokneam (IL); MENTOVICH, Elad, 2069200 Yokneam (IL); ZAHAVI, Eitan, 2069200 Yokneam (IL); RUSO, Ran Hasson, 2069200 Yokneam (IL)
(74) Representative: Mathys & Squire

(57) **Abstract**

In one embodiment, a network device comprises a network interface and a processor to receive, via the network interface, first homomorphically encrypted data from a first device and second homomorphically encrypted data from a second device, and perform a homomorphic arithmetic operation based at least on the first homomorphically encrypted data and the second homomorphically encrypted data to generate a homomorphically encrypted arithmetic result.

## Description

### FIELD OF DISCLOSURE

The present disclosure relates to computing systems, and more particularly but not exclusively to secure in-network computation using homomorphic encryption.

### BACKGROUND

In recent years, the field of network computing has seen significant advancements, particularly in the area of "in-network" computation. As distributed systems and large-scale data processing become increasingly prevalent, there is growing interest in efficient methods to handle complex computations across networks. Traditional approaches often involve transmitting large amounts of data to centralized processing units, which can lead to increased latency, bandwidth consumption, and overall system inefficiency.

In-network computation has emerged as a potential solution to address these challenges. By leveraging the computational capabilities of network devices themselves, such as switches and routers, it becomes possible to perform certain operations directly within the network infrastructure. This approach can potentially reduce the amount of data that needs to be transmitted, leading to improved performance and reduced resource utilization.

One area where in-network computation has shown promise is in the realm of machine learning workloads. Distributed machine learning algorithms often require the aggregation of model parameters from multiple nodes, with the sum operation being a fundamental component of many learning processes. The ability to perform these summations efficiently within the network itself could potentially lead to performance improvements in large-scale machine learning systems.

For example, a network node, such as a graphics processing unit (GPU), may initiate a parallel computing job with other GPUs across a network. In addition to the other GPUs participating in the parallel computing job, switches in the network may also participate in the parallel computing job by providing the various GPUs with the necessary data to perform the parallel computing job and also by performing such tasks as addition. The switches may perform reduction processing (e.g., summing two numbers together) and aggregation of data received from other network switches and/or GPUs.

An example of reduction and aggregation is provided in US Patent 10,284,383 to Bloch, et al., which describes a switch in a data network configured to mediate data exchanges among network elements. The apparatus further includes a processor, which organizes the network elements into a hierarchical tree having a root node network element, vertex node network elements, and child node network elements that include leaf node network elements. The leaf node network elements originate aggregation data and transmit the aggregation data to respective parent vertex node network elements. The vertex node network elements combine the aggregation data from at least a portion of the child node network elements, and transmit the combined aggregation data from the vertex node network elements to parent vertex node network elements. The root node network element is operative for initiating a reduction operation on the aggregation data.

### OVERVIEW

The invention is defined by the claims. In order to illustrate the invention, aspects and embodiments which may or may not fall within the scope of the claims are described herein.

There is provided in accordance with an embodiment of the present disclosure, an apparatus, comprising a network interface, and a processor to homomorphically encrypt input data using a homomorphic encryption scheme, transmit, via the network interface, the homomorphically encrypted input data to a network device, receive, via the network interface, a homomorphically encrypted result from the network device, wherein the homomorphically encrypted result represents at least one homomorphic arithmetic operation being performed by at least the network device based at least on the homomorphically encrypted input data and other homomorphically encrypted data, and homomorphically decrypt the homomorphically encrypted result to obtain a plaintext result of performing at least one arithmetic operation with the input data and other data.

Further in accordance with an embodiment of the present disclosure, the homomorphically encrypted result is based on homomorphic arithmetic reduction operations performed by a plurality of network devices in a data reduction and aggregation process.

Still further in accordance with an embodiment of the present disclosure, the homomorphic encryption scheme supports at least one type of homomorphic arithmetic operation on encrypted data without decryption.

Additionally in accordance with an embodiment of the present disclosure, the at least one type of homomorphic arithmetic operation includes at least one of homomorphic modular addition, homomorphic modular multiplication, homomorphic conjugation, a linear (Alexander) quandle operation, a log-linear quandle operation, or any operation based on quandle axioms.

Moreover in accordance with an embodiment of the present disclosure, the homomorphic encryption scheme is a quandle-based encryption scheme.

Further in accordance with an embodiment of the present disclosure, the homomorphic encryption scheme is an asymmetric homomorphic encryption scheme.

Still further in accordance with an embodiment of the present disclosure, the processor is to homomorphically encrypt the input data using a common public key of multiple nodes, and homomorphically decrypt the homomorphically encrypted result using a common private key of the multiple nodes.

Additionally, in accordance with an embodiment of the present disclosure, the processor is to homomorphically encrypt the input data using respective public keys of multiple nodes, and homomorphically decrypt the homomorphically encrypted result using a private key of the apparatus.

Moreover, in accordance with an embodiment of the present disclosure, the processor is to select different homomorphic encryption schemes for use with different types of homomorphic arithmetic operations.

There is provided in accordance with another embodiment of the present disclosure, a network device, comprising a network interface, and a processor to receive, via the network interface, first homomorphically encrypted data from a first device and second homomorphically encrypted data from a second device, perform a homomorphic arithmetic operation based at least on the first homomorphically encrypted data and the second homomorphically encrypted data to generate a homomorphically encrypted arithmetic result, and transmit, via the network interface, the homomorphically encrypted arithmetic result to another network device for further homomorphic arithmetic processing.

Further in accordance with an embodiment of the present disclosure, the processor is to perform the homomorphic arithmetic operation as part of a data reduction and aggregation process.

Still further in accordance with an embodiment of the present disclosure, the processor is to receive, via the network interface, another homomorphically encrypted arithmetic result from the other network device, and transmit, via the network interface, the received homomorphically encrypted result to a destination device.

Additionally in accordance with an embodiment of the present disclosure, the homomorphic arithmetic operation includes at least one of homomorphic modular addition, homomorphic modular multiplication, homomorphic conjugation, a linear (Alexander) quandle operation, a log-linear quandle operation, or any operation based on quandle axioms.

Moreover, in accordance with an embodiment of the present disclosure, the processor is to perform the homomorphic arithmetic operation based on a quandle-based operation.

There is also provided in accordance with still another embodiment of the present disclosure, a system comprising a plurality of nodes, each node comprising a first processor to homomorphically encrypt first data using a homomorphic encryption scheme, and decrypt a homomorphically encrypted first result, and a first network interface to provide the homomorphically encrypted first data to a given network device, and receive the homomorphically encrypted first result from the given network device, and a plurality of network devices, each network device comprising a second network interface, and a second processor to receive, via the second network interface, homomorphically encrypted second data from at least one of the nodes or from at least one of the network devices, perform a homomorphic arithmetic operation based at least on the received homomorphically encrypted second data, and transmit, via the second network interface, a result of the homomorphic arithmetic operation to another one of the network devices or another one of the nodes.

Further in accordance with an embodiment of the present disclosure, the second processor of the network devices is to receive the homomorphically encrypted second data, perform the homomorphic arithmetic operation, and transmit the result of the homomorphic arithmetic operation as part of a data reduction and aggregation process.

Still further in accordance with an embodiment of the present disclosure, the plurality of network devices are implemented in network switches.

Additionally in accordance with an embodiment of the present disclosure, the system supports multiple tenants, each tenant associated with a separate encrypted data stream.

Moreover, in accordance with an embodiment of the present disclosure, the homomorphic encryption scheme supports at least one type of homomorphic arithmetic operation on encrypted data without decryption.

Additionally in accordance with an embodiment of the present disclosure, the homomorphic arithmetic operation includes at least one of homomorphic modular addition, homomorphic modular multiplication, homomorphic conjugation, a linear (Alexander) quandle operation, a log-linear quandle operation, or any operation based on quandle axioms.

Still further in accordance with an embodiment of the present disclosure, the homomorphic encryption scheme is a quandle-based encryption scheme.

Further in accordance with an embodiment of the present disclosure, a system wherein the homomorphic encryption scheme is an asymmetric homomorphic encryption scheme.

Still further in accordance with an embodiment of the present disclosure, a system wherein the first processor is to homomorphically encrypt the first data using a common public key of the plurality of nodes, and homomorphically decrypt the homomorphically encrypted first result using a common private key of the plurality of nodes.

Additionally, in accordance with an embodiment of the present disclosure, a system wherein the first processor is to homomorphically encrypt the input data using public keys of respective ones of the nodes, and homomorphically decrypt the homomorphically encrypted first result using a private key of one of the nodes.

Moreover, in accordance with an embodiment of the present disclosure, a system wherein the first processor is to select different homomorphic encryption schemes for use with different types of homomorphic arithmetic operations.

Further in accordance with an embodiment of the present disclosure, a system wherein the second processor is to perform the homomorphic arithmetic operation based on a quandle-based operation.

There is provided in accordance with another embodiment of the present disclosure, a method comprising homomorphically encrypting input data using a homomorphic encryption scheme, transmitting the homomorphically encrypted input data to a network device, receiving a homomorphically encrypted result from the network device, wherein the homomorphically encrypted result represents at least one homomorphic arithmetic operation being performed by at least the network device based at least on the homomorphically encrypted input data and other homomorphically encrypted data, and homomorphically decrypting the homomorphically encrypted result to obtain a plaintext result of performing at least one arithmetic operation with the input data and other data.

There is also provided in accordance with still another embodiment of the present disclosure, a method comprising receiving first homomorphically encrypted data from a first device and second homomorphically encrypted data from a second device, performing a homomorphic arithmetic operation based at least on the first homomorphically encrypted data and the second homomorphically encrypted data to generate a homomorphically encrypted arithmetic result, and transmitting the homomorphically encrypted arithmetic result to another network device for further homomorphic arithmetic processing.

There is also provided in accordance with still another embodiment of the present disclosure, a method for secure computation comprising specifying an input variable comprising one or more first elements of a quandle and an arithmetic computation to be performed over the variable, encrypting the input variable using a first operation of the quandle performed over the input variable together with an encoding variable comprising one or more non-unity second elements of the quandle, applying the arithmetic computation to the encrypted input variable to produce an encrypted output variable, and decrypting the encrypted output variable using the encoding variable and a second operation of the quandle to obtain a result of the arithmetic computation over the variable, wherein the input variable is encrypted by an originating computer, which transmits the encrypted input variable over a communication network to an intermediate computer, the arithmetic operation is applied to the encrypted input variable by the intermediate computer, which transmits the encrypted output variable over the communication network to a receiving computer, and the encrypted output variable is decrypted by the receiving computer.

Further in accordance with an embodiment of the present disclosure, a method wherein the receiving computer is the originating computer.

Still further in accordance with an embodiment of the present disclosure, a method wherein the encrypted output variable is decrypted using a secret key that is not accessible to the intermediate computer.

Any feature of one aspect or embodiment may be applied to other aspects or embodiments, in any appropriate combination. In particular, any feature of a method aspect or embodiment may be applied to an apparatus aspect or embodiment, and vice versa.

### BRIEF DESCRIPTION OF THE DRAWINGS

The present disclosure will be understood from the following detailed description, taken in conjunction with the drawings in which:
Fig. 1 is a block diagram that schematically illustrates a system for secure computation, in accordance with an embodiment of the present disclosure;
Fig. 2 is a schematic illustration of a braid used for encryption and decryption, in accordance with an embodiment of the present disclosure;
Fig. 3 is a simplified pictorial illustration of a computer system comprising network devices and processing nodes, in accordance with an embodiment of the present disclosure;
Fig. 4 is a more detailed view of a portion of the computer system of Fig. 3, constructed and operative in accordance with an embodiment of the present disclosure;
Fig. 5 illustrates a block diagram of a processing node in the system of Fig. 3;
Fig. 6 is a flowchart including steps in a method of operation of the processing node of Fig. 5;
Fig. 7 illustrates a block diagram of a network device in the system of Fig. 3;
Fig. 8 is a flowchart including steps in a method of operation of the network device of Fig. 7; and
Fig. 9 is a block diagram that schematically illustrates a computing system, e.g., a data center or a High-Performance Computing (HPC) cluster, in accordance with an embodiment of the present disclosure.

### DESCRIPTION OF EXAMPLE EMBODIMENTS

### OVERVIEW OF EXAMPLE EMBODIMENTS

Confidential computing has become a feature of interest for modern cloud infrastructure, aiming to ensure the integrity and privacy of tenant services hosted on computing infrastructure. Traditional approaches involve encrypting tenant data during storage, memory access, and network transfer, as well as utilizing secure CPU enclaves for running tenant code. However, applying these security measures to in-network computing presents challenges due to power and area requirements.

The integration of in-network computing capabilities within confidential computing enabled cloud environments is an area of ongoing research and development. Balancing security, efficiency, and computational power in such systems remains a topic of interest in the field of network computing and data privacy.

Therefore, embodiments of the present disclosure address at least some of the above drawbacks by providing a system and method for secure in-network computation using homomorphic encryption. This approach enables arithmetic operations to be performed on encrypted data within network devices without compromising privacy or security. Homomorphic encryption is a cryptographic technique that allows computations to be performed on encrypted data without decrypting it first. This property makes it potentially useful for secure data processing in various scenarios, including cloud computing and data analysis.

In some embodiments, the system includes an encryption module configured to encrypt tenant data using an encryption protocol that supports homomorphic arithmetic operations. The system also includes an in-network computing engine implemented in network devices, such as switches, routers, or smart NICs, that can perform arithmetic operations on the encrypted tenant data without decrypting it. In some embodiments, the encryption-decryption process may include homomorphism with respect to key multiplication. In some embodiments, the encryption-decryption process may include a multistep process where different encryption/decryption keys, and possibly even different quandle structures, are used, such that additional layers of hardness are inserted from the perspective of an eavesdropper.

In some cases, the homomorphic encryption scheme is based on quandle structures, which provide support for various arithmetic operations while maintaining security.

This approach allows for operations such as addition, multiplication, modular arithmetic, conjugation, linear (Alexander) quandle operations, log-linear quandle operations, and other operations based on quandle axioms to be performed directly on encrypted data as it flows through the network.

In some embodiments, the homomorphic encryption scheme may be implemented as an asymmetric encryption system, utilizing both public and private keys. The system may support flexible key management approaches to accommodate various security requirements and operational scenarios. In some cases, a common public key may be used by multiple processing nodes to encrypt their input data, with a corresponding common private key shared among the nodes for decryption of the final result. Alternatively, the system may employ individual public and private keys for each processing node. The choice between common or individual key pairs may depend on factors such as the desired level of security, the complexity of key management, and the specific requirements of the distributed computing environment.

The advantages of embodiments of the present disclosure may include improved data privacy, reduced latency, and increased efficiency in distributed computing environments. By performing computations on encrypted data within the network infrastructure, the need for data decryption and re-encryption at intermediate points is removed, enhancing both security and performance.

### OVERVIEW OF QUANDLE BASED ENCRYPTION

Quandles are mathematical structures that encode the topological properties and symmetries of knots and braids. These concepts are described, for example, by Moskovich and Carmi in "Tangle machines," Proceedings of the Royal Society A 471:20150111. The authors illustrate how knots and braids can be used in applications such as information processing and computations, as well as how they can be represented symbolically using a formalism referred to as a "quandle."

Formally, a quandle is defined as a set Q of elements, e.g., x,y,z ∈ Q, and two binary operations, ▷ , ◁ , which operate on the elements of Q, i.e., ▷ , ◁ : QxQ → Q. The elements of the quandle may be, for example, integers, rational numbers, or multidimensional elements, such as vectors or matrices. The binary operations satisfy the following properties over all the elements in Q:
Idempotence: *x* ▷ *x = x .*

Reversibility: (*x* ▷ *y*) ◁ *y* = *x.* The reverse operations ▷ and ◁ are referred to herein as complementary operations.
Distributivity: (*x* ▷ *y*) ▷ z = (*x* ▷ *z*) ▷ (*y* ▷ *z*).

Moskovich and Carmi describe a number of specific examples of quandles that meet these criteria, including:
Conjugation quandles: *x* ▷ *y* =*y*⁻¹*xy*
Linear quandles: *x* ▷ *y* = (1 - *s*)*x + sy*
Loglinear quandles: *x* ▷ *y* = *x*¹⁻*^{s}y^{s}*

Other sets of elements and operations satisfying the above definition of a quandle are identified in the description below.

Homomorphic encryption schemes allow arithmetic computations to be performed on encrypted data such that when the result is decrypted, it will be identical to the result that would have been obtained by applying the same arithmetic computations to the original, unencrypted data. Thus, homomorphic encryption allows the owner of secret data to pass the data in encrypted form to an outsourced service, such as a cloud-based computation or storage service, without having to provide a decryption key.

The disclosure describes a method for secure computation that includes receiving a specification of an input variable comprising one or more first elements of a quandle and an arithmetic computation to be performed over the input variable. The method includes encrypting the input variable using a first operation of the quandle performed over the input variable together with an encoding variable comprising one or more non-unity second elements of the quandle. The arithmetic computation is applied to the encrypted input variable to produce an encrypted output variable. The method further includes decrypting the encrypted output variable using the encoding variable anda second operation ofthe quandle to obtain a result of the arithmetic computation over the variable.

The elements of the quandle may include non-integer rational numbers or may be multi-dimensional. The method may include applying a first encryption key in performing the first operation and applying a second encryption key in performing the second operation. In some aspects, the first encryption key may be a public key, and the second encryption key may be a private key complementary to the public key. The encoding variable may be part of at least the first encryption key.

The arithmetic computation may include one or more multiplications and may also include one or more modular additions. In some cases, encrypting the input variable may include applying a sequence of multiple quandle operations over the input variable together with the encoding variable. The sequence of multiple quandle operations may include at least a first operation belongingto a first quandle and a second operation belonging to a second quandle, different from the first quandle.

In some examples, the first operation of the quandle is:
$c = x ⊳ y = y {\left(\frac{x}{y}\right)}^{e} ,$
and the second operation of the quandle is:
$x = c ⊲ y = y {\left(\frac{c}{y}\right)}^{f} ,$ wherein x and y are the first and second elements of the quandle, respectively, c is the encrypted input variable, and e and f are complementary encryption keys. In other embodiments, the first and second operations are conjugation operations, linear operations, or loglinear operations.

### SYSTEM DESCRIPTION

Embodiments of the present disclosure that are described herein use quandles to encrypt and decrypt data. Depending on the type of quandle that is chosen, the data may comprise integers, rational numbers, vectors, or matrices, for example. In the disclosed embodiments, a computer encrypts an input variable x, which is an element of the quandle, using a first operation of the quandle, which is performed over the input variable together with an encoding variable y, which comprises one or more other non-unity elements of the quandle (i.e., y ≠ 1). In other words, the variable x is encrypted to create a codeword c by the quandle operation *x* ▷ *ₛ y = c*. The secret key used in the encryption may comprise a parameter ofthe quandle operation (such as the value s in the above-mentioned linear and loglinear quandles) and/or the encoding variable y.

Encrypted values are decrypted using a second, complementary operationofthe quandle: *c* ◁ *ₛ y = x*. Depending on the types of quandle operations used, the encryption may be symmetrical, using the same key for decryption as for encryption; or it may be asymmetrical, using a public key for encryption, for example, and a complementary private key for decryption. In this case, the parameters of the quandle operations may be used in both the public and the private keys of an asymmetrical cryptographic scheme.

Quandle-based encryption can be applied to multiple data types, as noted above, and it can be made substantially more complex and difficult to crack than existing schemes. To increase the complexity and resistance to attack, a "braid" of multiple, successive quandle operations can be applied to the input variable and the encoding variable, wherein each crossing of the strands corresponds to a specific binary operation involving the elements traversing these strands. The sequence of multiple quandle operation can even include operations belonging to two or more different quandles. Additionally, or alternatively, the sequence can include multiple different encoding variables and/or input variables, with successive quandle operations that braid the variables together in different combinations, which can be chosen arbitrarily.

Quandle-based encryption also has the advantage of supporting homomorphic computation. Quandle-based encryption using a linear or loglinear quandle (and in some cases the conjugation quandle, as well) is inherently homomorphic with respect to multiplication, meaning that for a pair of input variables x1 andx2, (*x*₁ ▷ *y*₁)(*x*₂ ▷ *y*₂) = (*x*₁*x*₂) ▷ (*y*₁*y*₂). The linear quandle is also homomorphic with respect to addition.

With some adjustments found by the inventors, loglinear quandle-based encryption can be also made homomorphic with respect to modular addition. Specifically, for a loglinear quandle, it can be proven that:
$\left[\left({x}_{1}p⊳y\right)+\left({x}_{2}q⊳y\right)\right] mod n = \left[\left({x}_{1}p+{x}_{2}p\right)\right] ⊳ y mod n ,$
wherein p and q are prime numbers, and *n* = *pq*. Using this approach it is possible, for example, to compute the sum *x*₁ *+ x*₂ by combining decrypted messages using the formula: [(*x*₁*p* ▷ *y*) *+* (*x*₂*q* ▷ *y*)] ◁ y + [(*x*₁*q* ▷ *y*) *+* (*x*₂*p* ▷ *y*)] ◁ *y* = (*x*₁ *+ x*₂)(*p + q*) mod *n*, followed by division by *p + q* to obtain the sum of interest.

The primes *p* and *q* may be used in generating the keys used in an asymmetric quandle-based encryption scheme. To avoid possible disclosure of the secret key, p and q can be concealed in homomorphic computations by using some rational number *m* to compute *p' = p* ▷ *m* and *q' = q* ▷ *m*. The values p' and q' can then be used in homomorphic computations in the same manner as p and q. More generally, *p* and q can be zero divisors in the cyclic group $ℤ / nℤ$ or any group isomorphic to it.

Although the present description relates particularly to homomorphic properties of loglinear quandles, the principles of these embodiments may likewise be applied to other quandles, mutatis mutandis. For example, as noted above, the linear quandle is homomorphic with respect to both multiplication and addition, and other quandle structures can be shown to be homomorphic, as well.

The disclosed embodiments make use of the homomorphic properties of quandle-based encryption in performing secure computations. For this purpose, a user of a computational system specifies an input variable comprising one or more elements of a quandle and an arithmetic computation to be performed over the variable. The system encrypts the input variable by performing a first operation of the quandle over the input variable together with an encoding variable, which itself comprises one or more non-unity elements of the quandle.

The specified arithmetic computation is then applied to the encrypted input variable to produce an encrypted output variable. The computation may be applied, for example, by a network service that is not necessarily secure. The arithmetic computation may comprise one or more multiplications and/or one or more modular addition operations. The encrypted output variable is then decrypted using the encoding variable and a second operation of the quandle to obtain the result of the arithmetic computation over the input variable.

Any suitable type of quandle may be used for purposes of the encryption and decryption operations. For example, the quandle operations used for encryption may comprise conjugation operations, linear operations, loglinear operations, or sequences of quandle operations belonging to the same quandle or to different quandles.

As another example, the first quandle operation, used to encrypt the input variable x, may be of the form:
$c = x ⊳ y = y {\left(\frac{x}{y}\right)}^{e} ,$ giving the encrypted input variable c,
while the second quandle operation is of the form:
$x = c ⊲ y = y {\left(\frac{c}{y}\right)}^{f} ,$

In this example, e and f are complementary encryption keys. Specifically, e and f may serve as public and private encryption keys, respectively, and may be chosen in a manner similar to the key generation algorithm used in conventional asymmetric encryption schemes, such as RSA. For this purpose, a pair of large prime numbers p and q are chosen, giving the modulus n = pq and the Euler totient function φ(n) = (p - 1)(q - 1). The keys e and f are chosen such that e < φ(n) and ef = 1 mod φ(n). Alternatively, Carmichael's totient function λ(n) may be used in place of φ(n). Despite the use of a known key generation algorithm, the more complex functional form of these quandle operations, including the non-unity encoding variable y, makes the quandle-based encryption scheme less vulnerable to attack. This quandle is homomorphic with respect to modular addition performed using the modulus n.

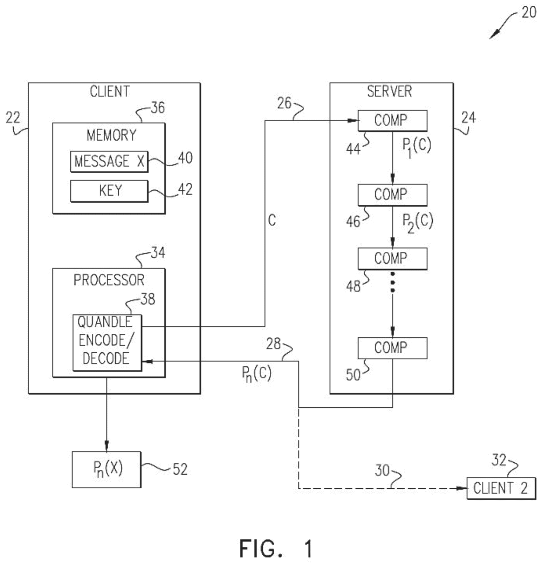

Fig. 1 is a block diagram that schematically illustrates a system 20 for secure computation, in accordance with an embodiment of the disclosure. System 20 in this example comprises a client computer 22, which communicates over a communication network, such as a switch fabric in a data center, with a server 24. Server 24 may comprise a computational accelerator, which provides high-speed computation services to clients on the network. In this example, client computer 22 is the originating computer, which receives a specification of an input variable x and an arithmetic computation P to be performed over the variable, while server 24 serves as the intermediate computer that performs the specified computation.

Client computer 22 comprises a processor 34 and a memory 36. Processor 34 typically comprises a microprocessor, which is programmed in software to carry out the functions that are described herein, including a quandle-based encoding and decoding function 38. The software may be downloaded to client computer 22 in electronic form, for example over a network. Additionally, or alternatively, the software may be stored on tangible, non-transitory computer-readable storage media. Further additionally alternatively, at least some of the components of quandle-based encoding and decoding function 38 may be implemented in dedicated or programmable hardware logic circuits.

Memory 36 stores a message 40 comprising an input variable x and an encryption key 42 for use by quandle-based encoding and decoding function 38 in encrypting x to generate a corresponding encrypted input variable c. Client computer 22 encrypts x using a first quandle operation (or a sequence of quandle operations) performed over the input variable x together with an encoding variable y comprising one or more non-unity elements of the quandle. Client computer then transmits c over a communication link 26 in the network to server 24.

Server 24 applies the specified arithmetic computation to the encrypted input variable c in a sequence of computational stages 44, 46, 48, ... 50. The computation is performed homomorphically, i.e., although the computation was specified with respect to the input variable x, server 24 applies computational stages 44, 46, 48, ... 50 to the encrypted input variable c to produce an encrypted output variable Pₙ(c).

Server 24 transmits the encrypted output variable over a communication link 28 in the network to a receiving computer, which decrypts the encrypted output variable using the appropriate complementary quandle operation and decryption key. The receiving computer thus obtains a result 52 of the arithmetic computation Pₙ(x) over the original variable x, which is the same result as would have been obtained by applying the specified computation to the original, unencrypted data. In the pictured example, the receiving computer is the originating computer, i.e., client computer 22. Alternatively, or additionally, the encrypted output variable may be transmitted over another communication link 30 to another client computer 32, which has the necessary key and quandle decryption capability to decrypt Pₙ(c).

As noted above, quandle-based encoding and decoding function 38 may apply either a symmetrical or asymmetrical encryption scheme in encrypting x and decrypting Pₙ(c). Because of the homomorphic nature of the encryption, however, the secret key that is used in the decryption operation need not be accessible to server 24. Thus, the computational capabilities of the server can be exploited without having to verify and trust the data security of the server.

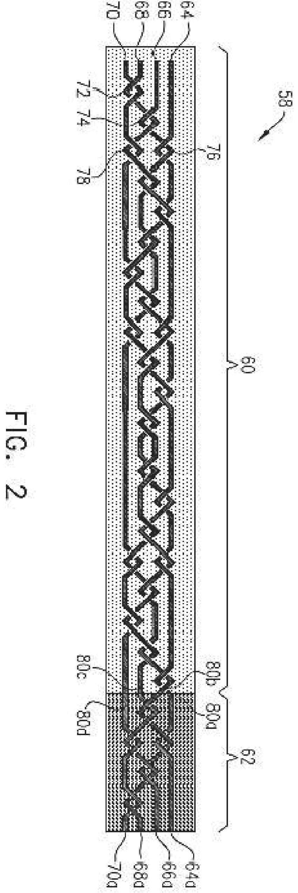

Fig. 2 is a schematic illustration of a braid 58 used for encryption and decryption, in accordance with an embodiment of the disclosure. Braid 58 represents graphically a sequence of quandle operations performed on an input variable x, which is received at an input 64, and a set of encoding variables yᵢ received at inputs 66, 68, 70. The encoding variables may be chosen at random, or they may represent additional input variables, which are encrypted together with the input variable x to produce a combined encrypted result. Braid 58 comprises a series of crossings 72, 74, 76, 78..., each representing a binary quandle operation performed between a pair of the variables, using corresponding secret keys. The quandle operations may belong to the same quandle or different quandles and may use the same keys or different keys. The quandle operations are chosen, however, so that at the end of braid 58, the tangles are unraveled to return the original, plaintext inputs at outputs 64a, 66a, 68a, and 70a, respectively.

Braid 58 is divided into an encryption sub-braid 60 and a decryption sub-braid 62. Encryption sub-braid 60 can serve as a public encryption function, like the public key of an asymmetric encryption scheme, and outputs encrypted codewords at outputs 80a, 80b, 80c and 80d. Decryption sub-braid 62 is needed to decrypt these codewords and is therefore held like a private key.

The codewords from outputs 80a, 80b, 80c and 80d may be transmitted over a communication link, for example, and may be input to a specified arithmetic operation. The homomorphic properties of the quandle-based encryption schemes described above apply, as well, to the sequential encryption scheme represented by braid 58. After application of the arithmetic operation to the codewords output by sub-braid 60, the encrypted computational results may be decrypted using sub-braid 62.

In more formal terms, a user prepares braid 58 by defining strings of complementary quandle operations *Rᵢ*, *Lᵢ* on *x* and *y*₁,..., *yₙ.* These strings of operations result in two vector-valued functions $\vec{f} \left(x,{y}_{1},…,{y}_{n}\right) : {ℚ}^{n + 1} \to {ℚ}^{n + 1}$ (represented by sub-braid 60) and $\vec{g} \left(x,{y}_{1},…,{y}_{n}\right) : {ℚ}^{n + 1} \to {ℚ}^{n + 1}$ (represented by sub-braid 62). The functions are chosen such that $\vec{f} ∘ \vec{g} = \vec{I}$, wherein $\vec{I}$ is the identity function, meaning that at the end of the braid, all the strands are untangled. *̅f̅*̅ may be public and used for encryption, while *̅g̅*̅ is kept private and used for decryption. *̅f̅*̅ and *̅g̅*̅ are based on strings containing any number of rational numbers *z* ∈ {*x,y*₁,*...*,*yₙ*}, along with the operations and parentheses meaningfully inserted between them (since the underlying algebraic structure is non-associative).

Thus, the controlling party *D* can share with all users *Eⱼ* a black box function, *̅f̅*̅, which they can use for encoding, but this function is extremely hard to invert for any *Eⱼ* ≠ *D*. Only *D* knows: (1) How the black box was generated, (2) How to algebraically invert each quandle operation, and (3) How to topologically invert *̅g̅*̅ and untangle the knot. In the present embodiment, D uses these capabilities in decrypting the results of a homomorphic computation performed on the encoded data by one or more of the other users Eⱼ.

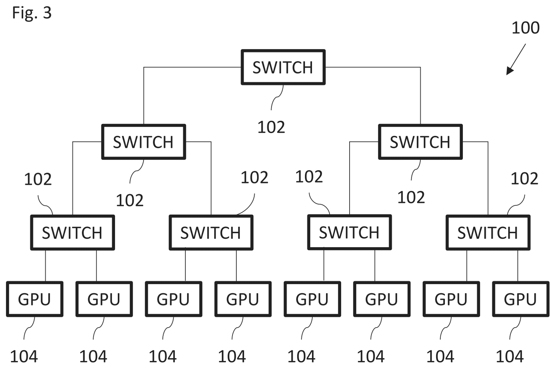

Reference is now made to Fig. 3, which is a simplified pictorial illustration of a computer system 100 constructed and operative in accordance with an embodiment of the present disclosure.

The computer system 100 comprises multiple network devices 102 arranged in a hierarchical tree structure and multiple processing nodes 104. The network devices 102 may be configured as switches that are interconnected (e.g., using network cables) to facilitate data communication and processing operations. At the bottom level of the hierarchy, multiple processing nodes 104 are connected to the network devices 102.

In some cases, a processing node 104 may include any one or more of the following: an accelerator device; a central processing unit (CPU); a graphics processing unit (GPU); a host device; a peripheral device; a network interface controller (NIC); or a data processing unit (DPU). In the example shown in Fig. 3, each processing node 104 is implemented as a GPU.

The network devices 102 may be implemented as network switches. The network devices 102 shown in Fig. 3 are arranged in multiple levels, with a single network device 102 at the top level, three network devices 102 at the middle level, and four network devices 102 at the bottom level directly connected to the processing nodes 104. Each network device 102 at the bottom level may be connected to two processing nodes 104. The system 100 may include any suitable number of levels, any suitable number of network devices 102, and any suitable number of processing devices 104 connected in any suitable topology.

The interconnections between the network devices 102 form data paths that may enable communication and data transfer throughout the computer system 100. The network devices 102 may perform operations such as data reduction and aggregation as information flows up through the hierarchical structure. Each processing node 104 may transmit data through its connected network device 102, which may then process and forward the data up through higher levels of the hierarchy.

In some cases, the computer system 100 may support multiple tenants, with each tenant associated with a separate encrypted data stream or streams. This multi-tenant support may allow for secure and isolated data processing for different users or applications within the same system infrastructure.

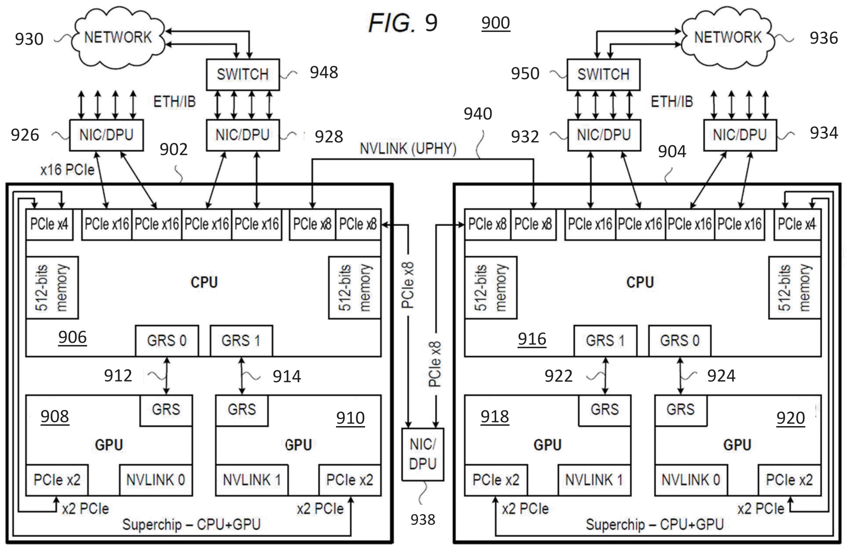

The computer system 100 may be implemented in a data center environment. Such an environment may include cooling systems to maintain optimal operating temperatures for the network devices 102 and processing nodes 104. The data center may also provide power supply systems to ensure consistent and reliable power delivery to all components of the computer system 100. Additionally, the data center environment may incorporate physical and cyber protection, such as access controls and security measures, to safeguard the computer system 100 and its data from unauthorized access or threats. The system 900 of Fig. 9 describes an example data center environment.

This hierarchical arrangement of network devices 102 and processing nodes 104 may allow for distributed processing and efficient data movement within the computer system 100, enabling complex computations and data handling tasks to be performed across the network infrastructure.

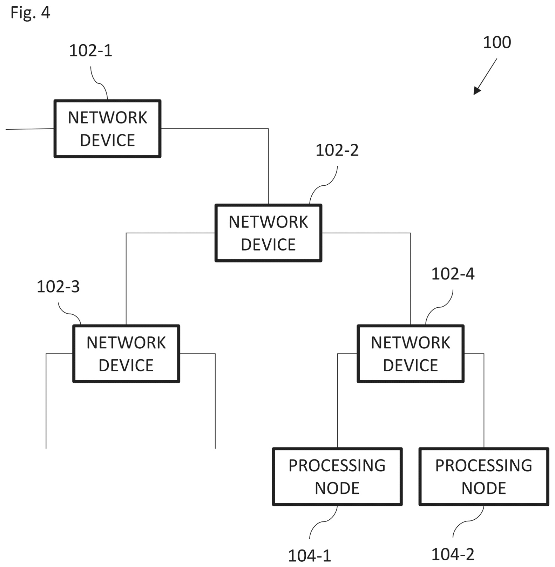

Reference is now made to Fig. 4, which is a simplified diagram illustrating part of computer system 100 comprising network devices 102 and processing nodes 104 arranged in a distributed configuration.

The computer system 100 includes a first network device 102-1, a second network device 102-2, a third network device 102-3, and a fourth network device 102-4. The computer system 100 also includes a first processing node 104-1 and a second processing node 104-2. The network devices 102-1, 102-2, 102-3, and 102-4 may be arranged in a distributed manner, enabling communication between the network devices and the processing nodes.

In some cases, the first processingnode 104-1 and the second processing node 104-2 may function as originating computers, encrypting input variables using a homomorphic encryption scheme. The network devices 102-1, 102-2, 102-3, and 102-4 may act as intermediate computers, applying arithmetic operations to the encrypted input variables. For example, the fourth network device 102-4 may receive first homomorphically encrypted data from the first processing node 104-1 and second homomorphically encrypted data from the second processing node 104-2. The fourth network device 102-4 may then perform a homomorphic arithmetic operation based on the first and second homomorphically encrypted data.

In some cases, the homomorphic arithmetic operations performed by the network devices may be part of a data reduction and aggregation process. For instance, the fourth network device 102-4 may generate a homomorphically encrypted arithmetic result based on the data received from the first processing node 104-1 and the second processing node 104-2. This result may then be transmitted to the second network device 102-2 for further homomorphic arithmetic processing.

Similarly, the third network device 102-3 may generate a homomorphically encrypted arithmetic result based on the data received from other processing nodes 104 (not shown in Fig. 4) and pass the result of its arithmetic operations to the second network device 102-2. The second network device 102-2 may perform additional homomorphic arithmetic operations based on the data received from the fourth network device 102-4 and the third network device 102-3, yielding a new result which may be passed on to the first network device 102-1.

The first network device 102-1 may perform further arithmetic operations with the data received from the second network device 102-2 and other data received from another network device 102 (not shown in Fig. 4). This process of performing homomorphic arithmetic operations and passing results between network devices may continue until the data has been fully reduced and aggregated.

Once the data reduction and aggregation process is complete, the final homomorphically encrypted result may be transmitted back through the network to one or more of the processing nodes 104. In some cases, the first processing node 104-1 or the second processing node 104-2 may function as a receiving computer, decrypting the encrypted output variable to obtain the result of the arithmetic computations.

In some implementations, the receiving computer may be the same as the originating computer. For example, the first processing node 104-1 may encrypt an input variable, transmit the encrypted input variable to the network devices for processing, and then receive and decrypt the final encrypted output variable.

To maintain security throughout this process, the encrypted output variable may be decrypted using a secret key that may not be accessible to the intermediate computers (i.e., the network devices 102-1, 102-2, 102-3, and 102-4). This ensures that the network devices can perform arithmetic operations on the encrypted data without having access to the underlying plaintext information.

The configuration of the computer system 100 as shown in Fig. 4 allows for efficient distributed processing and secure data handling through the use of homomorphic encryption techniques. The network devices can perform complex arithmetic operations on encrypted data as part of a reduction and aggregation process, while the processing nodes handle the initial encryption and final decryption of the data.

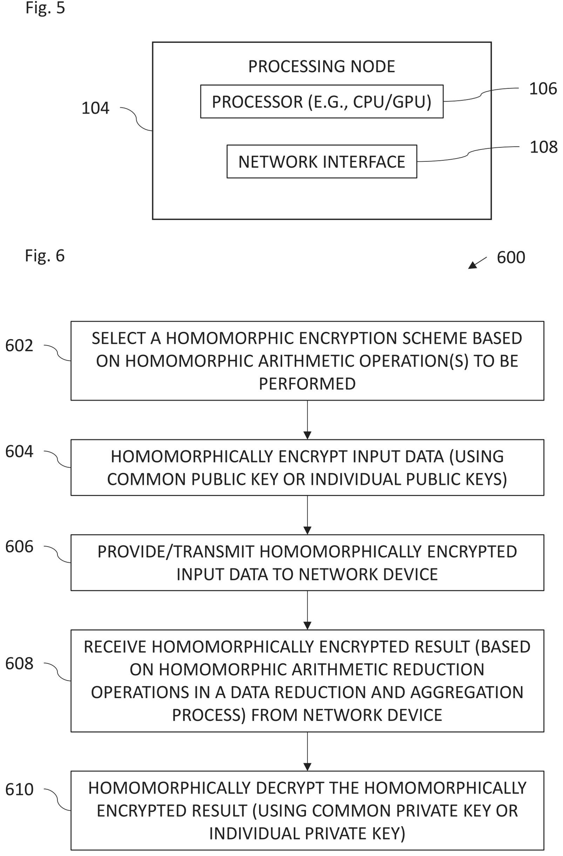

Reference is now made to Fig. 5, which is a simplified block diagram illustrating the structure of a processing node 104. The processing node 104 may comprise a processor 106 and a network interface 108. The processing node 104 may also include a memory (not shown). In some cases, the processor 106 may be implemented as a central processing unit (CPU), a graphics processing unit (GPU), or any other suitable processing device. The network interface 108 may include various hardware components such as an Ethernet port, packet processing circuitry, memory, firmware, LED indicators, a bus interface, a heat sink, power management circuitry, and connector pins.

The processor 106 may be configured to perform various operations related to homomorphic encryption and decryption. In some cases, the processor 106 may homomorphically encrypt input data using a homomorphic encryption scheme. The homomorphic encryption scheme may support at least one type of homomorphic arithmetic operation being performed on encrypted data without the need for decryption. In some cases, the homomorphic encryption scheme may be a quandle-based encryption scheme or an asymmetric homomorphic encryption scheme.

The processor 106 may transmit the homomorphically encrypted input data to a network device via the network interface 108. Subsequently, the processor 106 may receive a homomorphically encrypted result from the network device via the network interface 108. The homomorphically encrypted result may represent at least one homomorphic arithmetic operation performed by at least the network device based on the homomorphically encrypted input data and other homomorphically encrypted data.

In some cases, the processor 106 may homomorphically decrypt the homomorphically encrypted result to obtain plaintext, which is a result of performing at least one arithmetic operation with the input data and other data. The decryption process may involve using a private key of the processing node 104 or a common private key shared among multiple nodes.

Reference is now made to Fig. 6, which is a flowchart 600 illustrating a process of homomorphic encryption, data transmission, and result decryption performed by the processingnode 104. The flowchart 600 comprises multiple steps, including steps 602-610.

In step 602, the processor 106 may be configured to select a homomorphic encryption scheme. In some cases, the processor 106 may select different homomorphic encryption schemes for use with different types of homomorphic arithmetic operations. For example, homomorphic encryption scheme A may be suitable for homomorphic arithmetic operation B or C, and so on.

In step 604, the processor 106 may be configured to homomorphically encrypt input data using the selected homomorphic encryption scheme. The encryption process may involve using a common public key of multiple nodes or respective public keys of multiple nodes.

In step 606, the processor 106 may be configured to transmit the homomorphically encrypted input data to one of the network devices 102 via the network interface 108.

In step 608, the processor 106 may be configured to receive a homomorphically encrypted result from the network device 102 via the network interface 108.

In step 610, the processor 106 may be configured to homomorphically decrypt the homomorphically encrypted result to obtain a plaintext result. The decryption process may involve using a common private key of multiple nodes or a private key of the processing node 104.

In some cases, the homomorphic arithmetic operations may include homomorphic modular addition, homomorphic modular multiplication, homomorphic conjugation, a linear (Alexander) quandle operation, a log-linear quandle operation, or any operation based on quandle axioms.

In some cases, the processing node 104 may be implemented using software instructions executed by a computer using any suitable operating system or a cloud-based platform. The system may support implementation using hard-wired or programmable devices, or a combination of both.

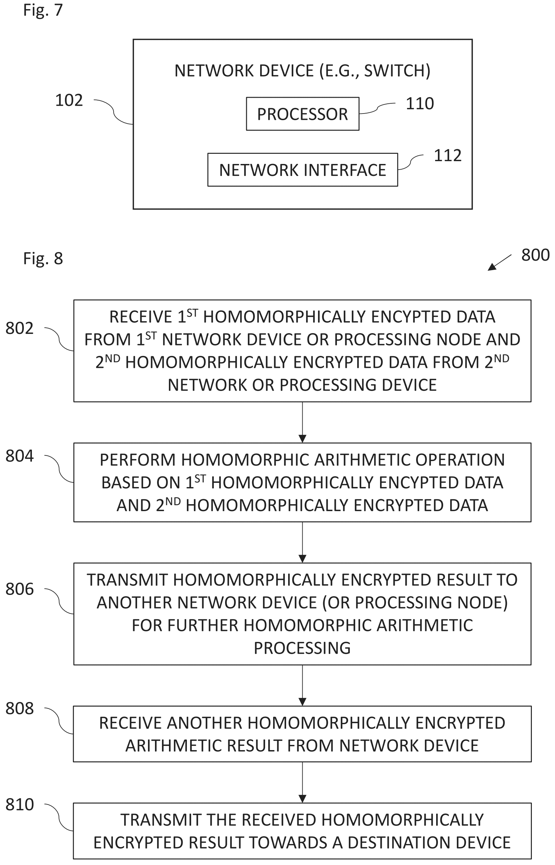

Reference is now made to Fig. 7, which is a block diagram illustrating a network device 102. The network device 102 may comprise a processor 110, a network interface 112, and optionally a memory (not shown). In some cases, the network device 102 may be implemented as a network switch.

The network interface 112 may include ports where network cables connect, enabling communication with other devices in the network. In some cases, the network interface 112 may include a switching fabric that manages data transfer between ports, a MAC address table that stores device addresses and port information, and a forwarding engine that directs data packets to the correct ports.

The processor 110 may be configured to perform various operations on homomorphically encrypted data. In some cases, the processor 110 may receive first homomorphically encrypted data from a first device and second homomorphically encrypted data from a second device via the network interface 112. The processor 110 may perform a homomorphic arithmetic operation based on the first and second homomorphically encrypted data (i.e., without decrypting the first and second homomorphically encrypted data) to generate a homomorphically encrypted arithmetic result.

In some cases, the homomorphic arithmetic operation may include at least one of: homomorphic modular addition, homomorphic modular multiplication, homomorphic conjugation, a linear (Alexander) quandle operation, a log-linear quandle operation, or any operation based on quandle axioms. The processor 110 may perform the homomorphic arithmetic operation based on a quandle-based operation.

After generating the homomorphically encrypted arithmetic result, the processor 110 may transmit the result to another network device for further homomorphic arithmetic processing via the network interface 112. In some cases, the processor 110 may receive another homomorphically encrypted arithmetic result from the other network device via the network interface 112. The processor 110 may then transmit the received homomorphically encrypted result to a destination device via the network interface 112.

Reference is now made to Fig. 8, which is a flowchart 800 illustrating a process of receiving, processing, and transmitting homomorphically encrypted data between network devices and processing nodes. The flowchart 800 comprises multiple steps that may be performed by the processor 110 of the network device 102.

At step 802, the processor 110 may receive first homomorphically encrypted data from a first device and second homomorphically encrypted data from a second device via the network interface 112. These devices may be other network devices or processing nodes in the network.

At step 804, the processor 110 may perform a homomorphic arithmetic operation based on the first homomorphically encrypted data and the second homomorphically encrypted data (without decrypting the first and second homomorphically encrypted data) to generate a homomorphically encrypted arithmetic result. As mentioned earlier, this operation may be based on a quandle-based operation.

At step 806, the processor 110 may optionally transmit the homomorphically encrypted arithmetic result to another network device for further homomorphic arithmetic processing via the network interface 112.

At step 808, the processor 110 may receive another homomorphically encrypted arithmetic result from the other network device via the network interface 112.

Finally, at step 810, the processor 110 may transmit the received homomorphically encrypted result to a destination device via the network interface 112. The destination device may be a processing node or another network device in the network.

In some cases, the network device 102 may include additional components such as buffer memory for temporarily holding data to manage traffic, a management processor for handling configuration and monitoring, a power supply, a cooling system, firmware that controls the network device 102, LED indicators that show status and activity, and networking modules that allow for additional ports or features.

This process allows for secure computation across the network, as the data remains encrypted throughout the transmission and processing stages, maintaining privacy and security while enabling complex computations to be performed across multiple network devices.

Reference is now made to Fig. 9, which is a block diagram that schematically illustrates a computing system 900, e.g., a data center or a High-Performance Computing(HPC) cluster, in accordance with an embodiment of the present disclosure.

System 900 comprises a plurality of subsystems, e.g., multiple processing devices coupled to each other, multiple network devices, and multiple networks, accordingto at least one embodiment. Computing system 900 is designed with multiple integrated circuits (referred to as processing devices), where each integrated circuit can include one or more CPUs and GPUs, forming a powerful and flexible architecture.

The various processing devices are interconnected via an NVLink or other high-speed interconnect, enabling high-speed communication between the subsystems, and are also connected through a NIC or DPU to ensure efficient data transfer across computing system 900 and to one or more external networks 930, 936. In the present example, system 900 comprises a packet switch 948 that connects NIC/DPU 928 to network 930, and a packet switch 950 that connects NIC/DPU 932 to network 936.

The coupling of processing devices through NVLink allows for seamless data exchange and parallel processing, enhancing overall computational performance. The processing devices are connected to multiple networks through one or more network interface cards (NICs) or DPUs, enabling the system to handle complex, multi-network tasks with high bandwidth and low latency. This configuration is highly suitable for demanding applications that require significant processing power, such as artificial intelligence (AI), machine learning (ML), and data-intensive computing, while ensuring robust connectivity and scalability across various networked environments. The integrated circuits of the computing system 900 can include one or more CPUs and one or more GPUs.

Fig. 9 also demonstrates an example architecture of a multi-GPU architecture. As illustrated in the figure, computing system 900 includes a processing device 902 with a multi-GPU architecture. In particular, processing device 902 may be a system-on-chip and includes multiple subsystems such as a CPU 906, a GPU 908, and a GPU 910. CPU 906 can be coupled to GPU 908 via a die-to-die (D2D) or chip-to-chip (C2C) interconnect 912, such as a Ground-Referenced Signaling interconnect (GRS interconnect). CPU 906 can be coupled to GPU 910 via a D2D or C2C interconnect 914. CPU 906 can also couple to GPU 908 and GPU 910 via PCIe interconnects.

CPU 906 can be coupled to one or more NICs or DPUs, which are coupled to one or more networks. For example, as illustrated in Fig. 9, CPU 906 is coupled to a first NIC/DPU 926, which is coupled to a network 930. CPU 906 is also coupled to a second NIC/DPU 928, which is coupled to network 930 via switch 948. NIC/DPU 926 and NIC/DPU 928 can be coupled to network 930 over Ethernet (ETH), NVLINK or InfiniBand (IB) connections, for example.

Computing system 900 also includes a processing device 904 with a multi-GPU architecture. In particular, processing device 904 includes multiple subsystems including a CPU 916, a GPU 918, and a GPU 920. CPU 916 can be coupled to GPU 918 via a D2D or C2C interconnect 922. CPU 916 can be coupled to GPU 920 via a D2D or C2C interconnect 924. CPU 916 can also couple to GPU 918 and GPU 920 via PCIe interconnects. CPU 916 can be coupled to one or more NICs or DPUs, which are coupled to one or more networks. For example, as illustrated in Fig. 9, CPU 916 is coupled to a first NIC/DPU 932, which is coupled to a network 936. CPU 916 is also coupled to a second NIC/DPU 934, which is coupled to network 936 via switch 950. NIC/DPU 932 and NIC/DPU 934 can be coupled to network 936 over Ethernet (ETH), NVLINK or InfiniBand (IB) connections.

In at least one embodiment, processing device 902 and processing device 904 can communicate with each other via a NIC/DPU 938, such as over PCIe interconnects. Processing device 902 and processing device 904 can also communicate with each other over a high-bandwidth communication interconnect 940, such as an NVLink interconnect or other high-speed interconnects. The packet switches in Fig. 9 may comprise, for example, Nvidia Quantum-2 switches. The NICs/DPUs in the figure may comprise, for example, Nvidia Bluefield DPUs.

The processing device described above with reference to Figs. 3-8 may be any suitable device, such as: an accelerator device; a processing device including a central processing unit (CPU) and/or a graphics processing unit (GPU); a host device connected to one or more peripheral devices; a peripheral device connected to another peripheral device and/or one or more host devices, a data processing unit (DPU) or smart NIC including a NIC and one or more processing cores.

The network device described above with reference to Figs. 3-8 may be any suitable network device, e.g., a network interface controller (NIC) device, a data processing unit (DPU) or smart NIC including a NIC and one or more processing cores, or a network switch. One or more of the processing steps described herein may be performed by a CPU, GPU, DPU, NIC, or any suitable combination thereof.

The NIC may include any of the following: an Ethernet Port (RJ45 Connector), which is the physical interface where the network cable (usually an Ethernet cable) connects to the NIC and is used for wired network connections; packet processing hardware or circuitry, which is responsible for handling network communication and processes incoming and outgoing data packets and manages the network interface functions; a memory (such as RAM or ROM) to store temporary data, such as network packet buffers, configuration settings, and firmware, and helps in speeding up data transfer and processing; firmware, which is software programmed into the NIC's memory and controls the hardware operations and may perform firmware updates to improve performance or add new features to the NIC; LED Indicators that provide visual indicators of network status, common indicators including power status, network activity, and link speed; a bus Interface (e.g., PCI or PCIe) to connect the NIC to the host computer's motherboard; a processor to handle network processing tasks as well as other processing tasks to offload work from the main CPU of the host device and improve network performance; a heat sink or cooling mechanism (e.g., for high-performance NICs), especially those used in servers, to prevent overheating; power management circuitry to ensure the NIC receives the correct amount of power and manages power consumption efficiently; and/or connector pins and circuitry including internal connections and pathways that route signals between the NIC's components.

The packet processing hardware or circuitry is the central component of the NIC and handles network communications. It may include several key components that work together to manage and process network data, such as any one or more of the following: MAC (Media Access Control) Layer, which is responsible for handling the data link layer of the OSI model and manages how data packets are formatted, addressed, and transmitted over the network; MAC address register, which stores the unique hardware address (MAC address) of the NIC; a frame buffer that temporarily holds data frames as they are being processed; a PHY (Physical Layer) Interface that interfaces with the physical medium (such as Ethernet cables) and is responsible for the actual transmission and reception of data bits over the network; a transceiver that converts data between the digital signals used by the MAC layer and the analog signals used for transmission over the network medium; DMA (Direct Memory Access) Controller that manages data transfers between the NIC and the computer's memory without involving the CPU and helps to offload processing tasks from the CPU and improve data transfer efficiency; a packet Processing Engine that handles the encapsulation and decapsulation of network packets, and processes incoming and outgoing packets, managing tasks like error checking and packet filtering; buffer management, which includes memory areas for storing packets temporarily, such as transmit buffers to store packets that are being sent from the computer to the network, receive buffers to store packets received from the network before they are processed by the system; an interrupt controller that manages and generates interrupts to notify the CPU of events such as packet reception or transmission completion and helps in efficient handling of network events; a clock generator, which provides timing signals for the various components of the NIC to synchronize their operations; a power management unit to regulate power consumption and manages power-saving features ofthe NIC chip to improve energy efficiency; error handling and correction logic, which detects and corrects errors in data transmission and reception, and may include features for error-checking protocols like CRC (Cyclic Redundancy Check); configuration registers that store configuration settings and parameters that control the NIC's operation, such as speed settings, interrupt configurations, and buffer sizes; firmware/ROM that contains the embedded software that controls the NIC's operations and manages network protocols.

The network switch may include any of the following: ports where network cables connect; switching fabric that manages data transfer between ports; a MAC address table that stores device addresses and port information; a forwarding engine that directs data packets to the correct ports; buffer memory that temporarily holds data to manage traffic; a management processor that handles configuration and monitoring in managed switches; a power supply that provides electrical power; a cooling system that keeps the switch from overheating; firmware that controls the switch; LED Indicators that show status and activity; and networking modules (in modular switches) that allow for additional ports or features.

In practice, some or all of the functions of the processors described herein may be combined in a single physical component or, alternatively, implemented using multiple physical components. These physical components may comprise hard-wired or programmable devices, or a combination of the two. In some embodiments, at least some of the functions of the processing circuitry may be carried out by a programmable processor under the control of suitable software. This software may be downloaded to a device in electronic form, over a network, for example. Alternatively, or additionally, the software may be stored in tangible, non-transitory computer-readable storage media, such as optical, magnetic, or electronic memory.

The flowchart and block diagrams in the Figures illustrate the architecture, functionality, and operation of possible implementations of systems, methods and computer program products according to various examples of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, block diagrams and/or flowchart illustration, and combinations of blocks in the block diagrams and/or flowchart illustration, can be implemented by special purpose hardware-based systems that perform the specified functions or acts, or combinations of special purpose hardware and computer instructions. The descriptions of the various examples of the present disclosure have been presented for purposes of illustration, but are not intended to be exhaustive or limited to the examples disclosed. Many modifications and variations will be apparent to those of ordinary skill in the art without departing from the scope and spirit of the described examples.

Various features of the disclosure which are, for clarity, described in the contexts of separate embodiments may also be provided in combination in a single embodiment. Conversely, various features of the disclosure which are, for brevity, described in the context of a single embodiment may also be provided separately or in any suitable sub-combination.

The embodiments described above are cited by way of example, and the present disclosure is not limited by what has been particularly shown and described hereinabove. Rather the scope of the disclosure includes both combinations and sub-combinations of the various features described hereinabove, as well as variations and modifications thereofwhich would occur to persons skilled in the art upon reading the foregoing description and which are not disclosed in the prior art.

The disclosure of this application also includes the following numbered clauses:
Clause 1. A network device, comprising:
   a network interface; and
   a processor to:
      receive, via the network interface, first homomorphically encrypted data from a first device and second homomorphically encrypted data from a second device; and
      perform a homomorphic arithmetic operation based at least on the first homomorphically encrypted data and the second homomorphically encrypted data to generate a homomorphically encrypted arithmetic result.
Clause 2. The device according to clause 1, wherein the processor is to transmit, via the network interface, the homomorphically encrypted arithmetic result to another network device for further homomorphic arithmetic processing.
Clause 3. The device according to clause 2, wherein the processor is to perform the homomorphic arithmetic operation as part of a data reduction and aggregation process.
Clause 4. The device according to clause 1, wherein the processor is to:
   receive, via the network interface, another homomorphically encrypted arithmetic result from the other network device; and
   transmit, via the network interface, the received homomorphically encrypted result to a destination device.
Clause 5. The device according to clause 1, wherein the homomorphic arithmetic operation includes at least one of: homomorphic modular addition; homomorphic modular multiplication; homomorphic conjugation; a linear (Alexander) quandle operation, a log-linear quandle operation; or any operation based on quandle axioms.
Clause 6. The device according to clause 1, wherein the processor is to perform the homomorphic arithmetic operation based on a quandle-based operation.
Clause 7. A system comprising:
   a plurality of nodes, each node comprising:
      at least one first processor to homomorphically encrypt first data using a homomorphic encryption scheme, and/or decrypt a homomorphically encrypted first result; and
      a first network interface to: provide the homomorphically encrypted first data to a given network device; and/or receive the homomorphically encrypted first result from the given network device; and
   a plurality of network devices, each network device comprising:
      a second network interface; and
      at least one second processor to: receive, via the second network interface, homomorphically encrypted second data from at least one of the nodes or from at least one of the network devices; perform a homomorphic arithmetic operation based at least on the received homomorphically encrypted second data; and transmit, via the second network interface, a result of the homomorphic arithmetic operation to another one of the network devices or another one of the nodes.
Clause 8. The system according to clause 7, wherein:
   the at least one first processor is to homomorphically encrypt first data using a homomorphic encryption scheme, and decrypt a homomorphically encrypted first result; and
   the first network interface is to: provide the homomorphically encrypted first data to a given network device; and receive the homomorphically encrypted first result from the given network device.
Clause 9. The system according to clause 7, wherein the at least one second processor of the network devices is to receive the homomorphically encrypted second data, perform the homomorphic arithmetic operation, and transmit the result of the homomorphic arithmetic operation as part of a data reduction and aggregation process.
Clause 10. The system according to clause 7, wherein the plurality of network devices are implemented in network switches.
Clause 11. The system according to clause 7, wherein the system supports multiple tenants, each tenant associated with a separate encrypted data stream.
Clause 12. The system according to clause 7, wherein the homomorphic encryption scheme supports at least one type of homomorphic arithmetic operation on encrypted data without decryption.
Clause 13. The system according to clause 12, wherein the at least one type of homomorphic arithmetic operation includes at least one of: homomorphic modular addition; homomorphic modular multiplication; homomorphic conjugation; a linear (Alexander) quandle operation, a log-linear quandle operation; or any operation based on quandle axioms.
Clause 14. The system according to clause 7, wherein the homomorphic encryption scheme is a quandle-based encryption scheme.
Clause 15. The system according to clause 7, wherein the homomorphic encryption scheme is an asymmetric homomorphic encryption scheme.
Clause 16. The system according to clause 15, wherein the at least one first processor is to:
   homomorphically encrypt the first data using a common public key of the plurality of nodes; and
   homomorphically decrypt the homomorphically encrypted first result using a common private key of the plurality of nodes.
Clause 17. The system according to clause 15, wherein the at least one first processor is to:
   homomorphically encrypt the input data using public keys of respective ones of the nodes; and
   homomorphically decrypt the homomorphically encrypted first result using a private key of one of the nodes.
Clause 18. The system according to clause 7, wherein the at least one first processor is to select different homomorphic encryption schemes for use with different types of homomorphic arithmetic operations.
Clause 19. The system according to clause 7, wherein the at least one second processor is to perform the homomorphic arithmetic operation based on a quandle-based operation.
Clause 20. A method, comprising:
   homomorphically encrypting input data using a homomorphic encryption scheme;
   transmitting the homomorphically encrypted input data to a network device;
   receiving a homomorphically encrypted result from the network device, wherein the homomorphically encrypted result represents at least one homomorphic arithmetic operation being performed by at least the network device based at least on the homomorphically encrypted input data and other homomorphically encrypted data; and
   homomorphically decrypting the homomorphically encrypted result to obtain a plaintext result of performing at least one arithmetic operation with the input data and other data.
Clause 21. A method, comprising:
   receiving first homomorphically encrypted data from a first device and second homomorphically encrypted data from a second device; and
   performing a homomorphic arithmetic operation based at least on the first homomorphically encrypted data and the second homomorphically encrypted data to generate a homomorphically encrypted arithmetic result.

It will be understood that aspects and embodiments are described above purely by way of example, and that modifications of detail can be made within the scope of the claims.

Each apparatus, method, and feature disclosed in the description, and (where appropriate) the claims and drawings may be provided independently or in any appropriate combination.

Reference numerals appearing in the claims are by way of illustration only and shall have no limiting effect on the scope of the claims.

## Claims

1. A network device, comprising:
a network interface; and
a processor to:
receive, via the network interface, first homomorphically encrypted data from a first device and second homomorphically encrypted data from a second device; and
perform a homomorphic arithmetic operation based at least on the first homomorphically encrypted data and the second homomorphically encrypted data to generate a homomorphically encrypted arithmetic result.

2. The device according to claim 1, wherein the processor is to transmit, via the network interface, the homomorphically encrypted arithmetic result to another network device for further homomorphic arithmetic processing, wherein the processor is to perform the homomorphic arithmetic operation as part of a data reduction and aggregation process.

3. The device according to claim 1 or 2, wherein the processor is to:
receive, via the network interface, another homomorphically encrypted arithmetic result from the other network device; and
transmit, via the network interface, the received homomorphically encrypted result to a destination device.

4. The device according to claim 1, 2, or 3, wherein the homomorphic arithmetic operation includes at least one of: homomorphic modular addition; homomorphic modular multiplication; homomorphic conjugation; a linear (Alexander) quandle operation, a log-linear quandle operation; or any operation based on quandle axioms, preferably wherein the processor is to perform the homomorphic arithmetic operation based on a quandle-based operation.

5. A system comprising:
a plurality of nodes, each node comprising:
at least one first processor to homomorphically encrypt first data using a homomorphic encryption scheme, and/or decrypt a homomorphically encrypted first result; and
a first network interface to: provide the homomorphically encrypted first data to a given network device; and/or receive the homomorphically encrypted first result from the given network device; and
a plurality of network devices, each network device comprising:
a second network interface; and
at least one second processor to: receive, via the second network interface, homomorphically encrypted second data from at least one of the nodes or from at least one of the network devices; perform a homomorphic arithmetic operation based at least on the received homomorphically encrypted second data; and transmit, via the second network interface, a result of the homomorphic arithmetic operation to another one of the network devices or another one of the nodes.

6. The system according to claim 5, wherein:
the at least one first processor is to homomorphically encrypt first data using a homomorphic encryption scheme, and decrypt a homomorphically encrypted first result; and
the first network interface is to: provide the homomorphically encrypted first data to a given network device; and receive the homomorphically encrypted first result from the given network device.

7. The system according to claim 5 or 6, wherein the at least one second processor of the network devices is to receive the homomorphically encrypted second data, perform the homomorphic arithmetic operation, and transmit the result of the homomorphic arithmetic operation as part of a data reduction and aggregation process.

8. The system according to claim 5, 6, or 7, wherein the plurality of network devices are implemented in network switches.

9. The system according to any of claims 5-8, wherein the system supports multiple tenants, each tenant associated with a separate encrypted data stream.

10. The system according to any of claims 5-9, wherein the homomorphic encryption scheme supports at least one type of homomorphic arithmetic operation on encrypted data without decryption, wherein the at least one type of homomorphic arithmetic operation includes at least one of: homomorphic modular addition; homomorphic modular multiplication; homomorphic conjugation; a linear (Alexander) quandle operation, a log-linear quandle operation; or any operation based on quandle axioms.

11. The system according to any of claims 5-10, wherein the homomorphic encryption scheme is a quandle-based encryption scheme.

12. The system according to any of claims 5-10, wherein the homomorphic encryption scheme is an asymmetric homomorphic encryption scheme, wherein the at least one first processor is to:
homomorphically encrypt the first data using a common public key of the plurality of nodes; and
homomorphically decrypt the homomorphically encrypted first result using a common private key of the plurality of nodes; or
homomorphically encrypt the input data using public keys of respective ones of the nodes; and
homomorphically decrypt the homomorphically encrypted first result using a private key of one of the nodes.

13. The system according to any of claims 5-12, wherein the at least one first processor is to select different homomorphic encryption schemes for use with different types of homomorphic arithmetic operations.

14. A method, comprising:
homomorphically encrypting input data using a homomorphic encryption scheme;
transmitting the homomorphically encrypted input data to a network device;
receiving a homomorphically encrypted result from the network device, wherein the homomorphically encrypted result represents at least one homomorphic arithmetic operation being performed by at least the network device based at least on the homomorphically encrypted input data and other homomorphically encrypted data; and
homomorphically decrypting the homomorphically encrypted result to obtain a plaintext result of performing at least one arithmetic operation with the input data and other data.

15. A method, comprising:
receiving first homomorphically encrypted data from a first device and second homomorphically encrypted data from a second device; and
performing a homomorphic arithmetic operation based at least on the first homomorphically encrypted data and the second homomorphically encrypted data to generate a homomorphically encrypted arithmetic result.
